# EUROPEAN PATENT APPLICATION

(11) **EP 4 331 772 A1**
(43) Date of publication of application: **06.03.2024**
(21) Application number: 23185629.5
(22) Date of filing: 14.07.2023
(51) Int. Cl.: B23Q 39/02, B23Q 5/10, B23Q 5/26

(54) **TOOL-HOLDER UNIT FOR PROCESSING A TUBE**

(30) Priority: 01.09.2022 IT 202200017985
(71) Applicant: B.G.E. S.r.l., 25062 Concesio (BS) (IT)
(72) Inventor: BALOTELLI, Giuseppe, 25062 Concesio, Brescia (IT)
(74) Representative: Chimini, Francesco

(57) **Abstract**

A tool-holder unit for processing a tube comprises at least two tool supports (10), each of which rotatably supports a tool shaft (12) on which a tool (14) for processing the tube is suitable for being mounted so that the tool (14) processes the side surface of the tube. The tool supports (10) are mounted on a support-holder body (16) having a toroidal shape. At least one of the tool supports (10) is supported by the support-holder body (16) by means of radial movement means, which are operable for moving the tool support so that the respective tool (14) translates radially with respect to the tube to be processed. A transmission system is suitable for transferring the rotation of the support-holder body (16), driven by a motor apparatus, to the tool shafts (12) so as to obtain a motorized rotation of the tools during the processing.

## Description

The present invention relates to a tool-holder unit for performing a tube processing operation, of the type comprising two or more supports suitable for supporting relevant tools which working radially on the side surface of the tube. For example, such tools could be shears, mills, rollers, abrasive discs, etc.

As is well known, in certain embodiments, these tool supports are mounted on a toroidal or satellite body, positioned around the tube to be processed. The tools are free to rotate about their relevant shafts and are pressed against the side surface of the tube to obtain the desired processing.

This execution of the satellite-body processing group is advantageous because it makes it possible to process the tubes directly in line with previous processes, such as drawing or extrusion, simply by advancing the tube on a horizontal bench in order to insert it into the processing group.

In the event that the process involves cutting the tube, this type of processing groups, however, allows for cutting tubes with a limited thickness, up to a maximum of 3-4 mm.

Therefore, in the case of thicker tubes, the tube may not be processed in-line and must be moved and cut with other cutting machines.

The object of the present invention is to propose a tool-holder unit of the aforementioned type, but which is capable of processing, and in particular cutting, even very thick tubes, for example, up to 25 mm.

This object is achieved with a tool-holder unit in accordance with claim 1 and with a method for controlling the tool-holder unit according to claim 10. The dependent claims describe preferred or advantageous embodiments of the tool-holder unit and the control method thereof.

The features and advantages of the tool-holder unit and the control method thereof according to the invention will be evident from the following description of preferred example embodiments, provided for indicative and non-limiting purposes, with reference to the attached figures, wherein:

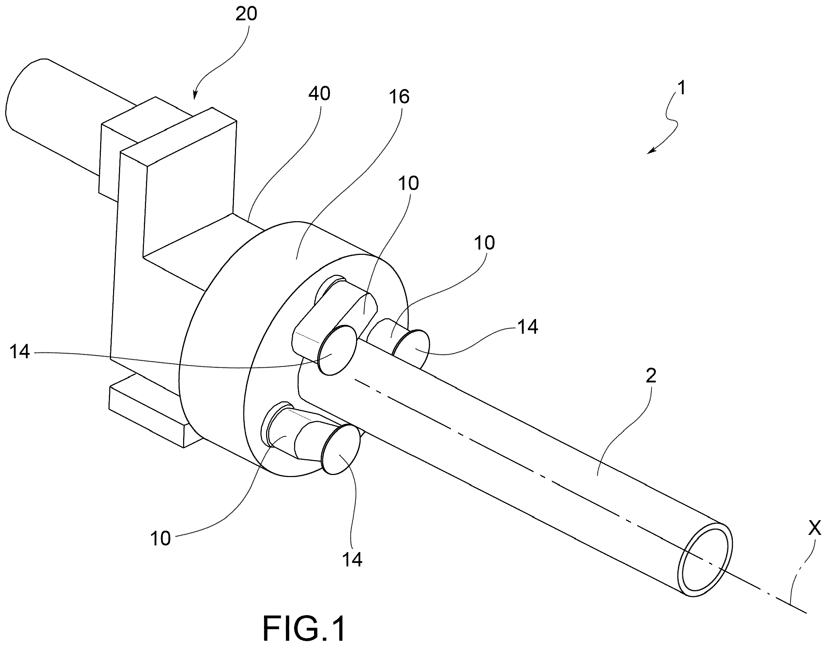

- Fig. 1 is a perspective view of a tool-holder unit on which three processing discs are mounted; and

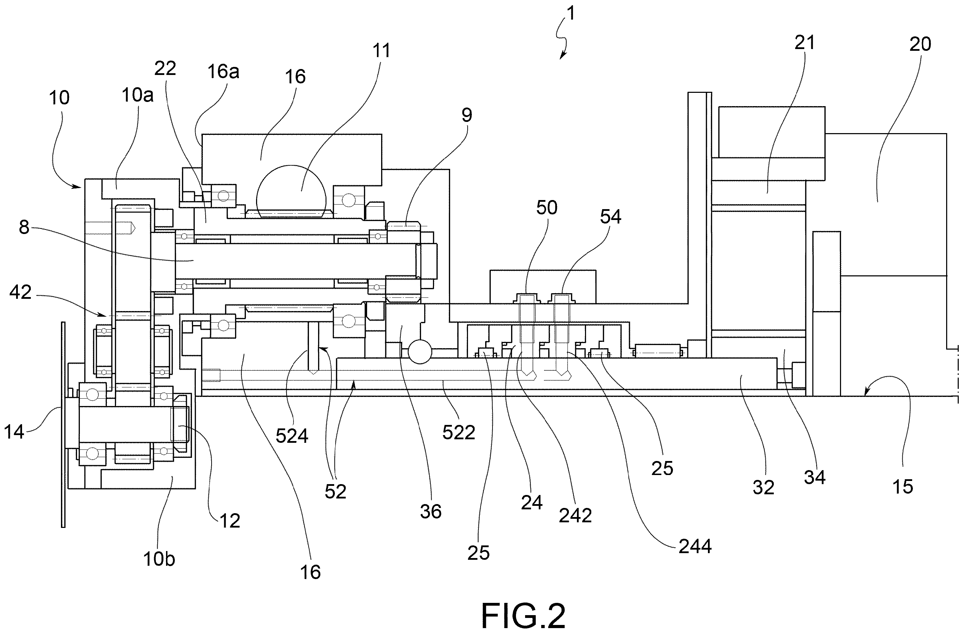

- Fig. 2 is an axial section of the tool-holder unit of Fig. 1;

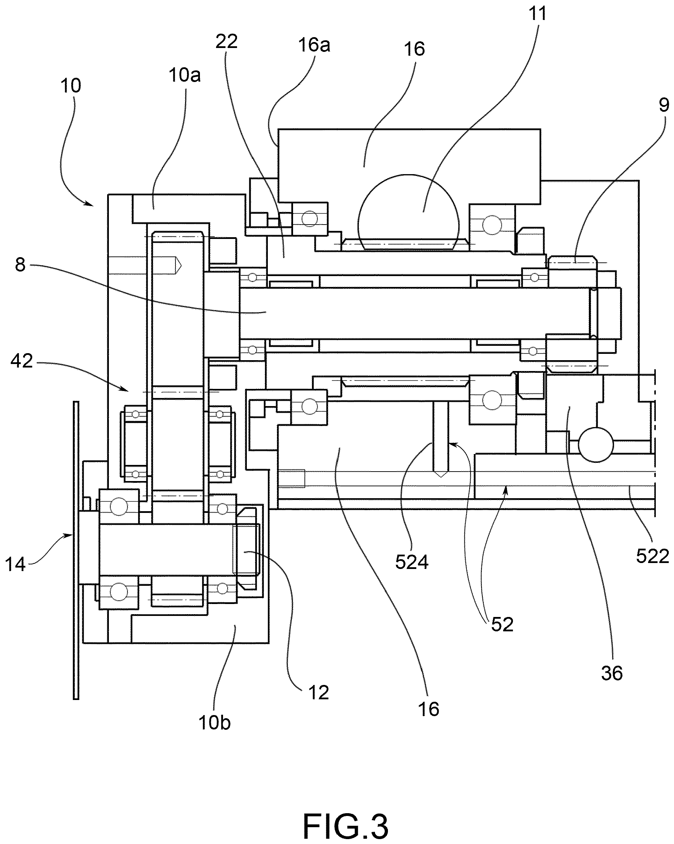

- Fig. 3 is an enlarged view of a front portion of the tool-holder unit; and
- Fig. 4 is a flowchart of the control method for the tool-holder unit.

In said drawings, 1 indicates a tool-holder unit for processing a tube 2 according to the invention as a whole.

In the subsequent description, certain geometric and/or structural features of the tool-holder unit 1 will be defined with reference to the longitudinal axis X of the tube 2 that is processed by tools mounted on the tool-holder unit 1.

Furthermore, in the following description, the terms "front" or "frontal" and "rear" are used in reference to the feed direction of the tube to be processed within the axial cavity formed by the tool-holder unit 1.

The tool-holder unit 1 is equipped with at least two tool supports 10. Each tool support 10 rotatably supports a tool shaft 12. A tool 14 for processing the tube 2 is adapted to be mounted on each tool shaft 12.

Each tool 14 is mounted in such a way as to process the side surface of the tube.

In a preferred embodiment, the tool shafts 12 have an axis of rotation Y parallel to the longitudinal axis X.

For example, the tools 14 are in the shape of discs or rollers, such as shearing discs, abrasive discs, brushing discs, polishing discs, rolling rollers, milling cutters, thread cutters, etc.

In one embodiment shown in the figures, the tool-holder unit is equipped with three tool supports 10, for example, angularly spaced apart by 120°.

The tool supports 10 are mounted on a support-holder body 16. This support-holder body 16 has a toroidal shape extending around a body axis X coinciding with the longitudinal axis X of the tube. The support-holder body 16 defines, at least partially, an axial cavity 18 into which the tube 2 to be processed is inserted.

In particular, the tool supports 10 are mounted on one side 16a, which for convenience may be defined as the "front side" considering, for example, the direction of insertion of the tube 2 into the axial cavity 18. This front side 16a is essentially perpendicular to the body axis X.

At least one of the tool supports 10, preferably all, is supported by the support-holder body 16 by means of radial movement means.

These radial movement means, of which a preferred embodiment will be described below, are operable for moving the tool support 10 with respect to the support-holder body 10 so that the respective tool 14 translates radially with respect to the tube 2 to be processed.

It should be noted that such radial translation is not limited to linear translation, but comprises any approach/removal movement of the tool 14 towards/away from the side surface of the tube 2, and therefore with respect to the longitudinal axis X. For example, radial translation may occur in a translation plane perpendicular to the longitudinal axis X.

The tool-holder unit 1 is equipped with a motor apparatus 20 suitable for rotating the support-holder body 16 and a transmission system suitable for transferring the rotation of the support-holder body 16 to the tool shafts 12 so as to obtain a motorized rotation of the tools 14 during the processing.

In one embodiment, the motor apparatus 20 comprises a gearmotor 20'.

In a preferred embodiment, the motor apparatus 20 and the support-holder body 16 are rotationally connected through a hollow rotation shaft 32.

This hollow rotation shaft 32 is supported rotatably in a unit body 40 that houses the motor apparatus 20. For example, the hollow rotation shaft 32 extends between a first end 32a, or rear end, operatively connected to the motor apparatus 20, and a second end 32b, or front end, operatively connected to the support-holder body 16.

For example, the motor apparatus 20 is equipped with a motor pulley 21 which, by means of a belt, rotates a shaft pulley 34 attached to the hollow rotation shaft 32.

The hollow rotation shaft 32 forms, together with the support-holder body 16, the axial cavity 18 for housing the tube 2 to be processed.

According to one embodiment, the motion transmission system from the tool-holder body 16 to the tool shafts 12 comprises, for each tool support 10, a transmission shaft 8 rotatably supported by the support-holder body 16 parallel to the body axis X.

Each transmission shaft 8 is provided, for example, at one of its rear ends protruding from the support-holder body 16, with a gear 9, such as a toothed wheel, which engages a fixed toothed crown 36 so that, following the rotation of the support-holder body 16, the gear 9 rotates on the fixed toothed crown 36 causing the rotation of the respective transmission shaft 8.

For example, the fixed toothed crown 36 is secured to one end (front) of the unit body 40 and is thus arranged about the hollow rotation shaft 32.

The motion of each transmission shaft 8 is transferred through angular coupling means, such as through gears 42, to the respective tool shaft 12.

It should be noted that the ratio between the transmission shaft 8 and the corresponding tool shaft 12 may be either reducing or multiplying, as needed.

Returning now to the radial movement means for the translation of tools 14 with respect to the surface of the tube 2, in one embodiment these radial movement means are operable by a pressurized actuation fluid, such as air or oil.

In this case, the tool-holder unit 1 is equipped with fluid feeding means comprising at least one inlet port 50 for the inlet of pressurized fluid into the unit 1, a feeding circuit 52 of the radial movement means, and at least one discharge port 54 for the outlet of pressurized fluid from the unit 1.

In one embodiment, the radial movement means comprise a rack-cylinder 11 operable by means of pressurized fluid and a toothed bush 22 that is rotatably supported in the support-holder body 16. The teeth of this toothed bush 22 engage with the teeth of the rack of the cylinder-rack 11, in such a way that the translation of the rack causes a rotation of the toothed bush 22.

In one embodiment, the rack-cylinders 11 are arranged transversely within the support-holder body 16, and the corresponding toothed bushes 22 are arranged parallel to the body axis X.

At least one tool-support 10 is fixed at least angularly to one end, for example, the front end, of the respective toothed bush 22. In other words, this end of the toothed bush 22 is accessible from the front side of the support-holder body 16.

In one embodiment, the tool supports 10 are removably connected to their relevant toothed bushes 22, for example, by means of screws, so as to be easily disassembled from the unit for replacement or maintenance purposes.

In one embodiment, the at least one tool support 10 is in the shape of an oscillating arm having a proximal end portion 10a fixed to the respective toothed bush 22 and a distal end portion 10b rotatably housing the respective tool shaft 12.

In one embodiment, the transmission shaft 8 passes coaxially through the toothed bush 22.

In one embodiment, the stroke of the radial movement means, for example the stroke of the rack-cylinders 11, may be mechanically adjusted through stops. As a result, it is possible to adjust the stroke, for example the amplitude of the arc described by the tool supports 10, and thus avoid collisions between the tools 14.

In one embodiment, the fluid feeding means comprise a fluid distributor 24 arranged around the hollow rotation shaft 32. The fluid distributor 24 is preferably housed within the unit body 40.

Between the fluid distributor 24 and the hollow rotation shaft 32, bearings 25 are interposed suitable for allowing the rotation of the hollow rotation shaft 32 with respect to the fluid distributor 24.

In the fluid distributor 24, inlet passages 242 and outlet passages 244 of pressurized fluid are obtained. For example, these inlet passages 242 and outlet passages 244 are fluidically sealed to the inlet port 50 and the discharge port 54, respectively.

The fluid feeding circuit 52 comprises feeding and discharge ducts 522, 524 obtained in the hollow rotation shaft 32 and in the support-holder body 16 and in fluidic communication in a sealed manner with the inlet and outlet passages 242, 244.

In one embodiment, the number of feedings in the distributor 24, and therefore the feeding and discharge ducts 522, 524, may be equal to two for each cylinder-rack 11, so as to operate these radial movement means independently from each other to obtain a simultaneous or differentiated processing of the tools. In this way, for example, the individual tool may have differentiated cutting parameters, such as feed rate, stroke, and number of revolutions, and it is then possible to obtain the individual tools to be processed either simultaneously or sequentially in cascade.

This simultaneous or differentiated processing of the tools may be achieved with respect to the current absorbed by the motor apparatus 20; if the tools work sequentially with each other, the current absorption to the motor is reduced, while augmenting, however, the cycle time, which is the sum of the individual cycle times; if the processing of the individual tools is done simultaneously, the current absorption increases, but the cycle times are reduced.

In one embodiment, the fluid distributor 24 is provided with an additional inlet passage for a refrigerant. In the hollow rotation shaft 32 and in the support-holder body 16 a dispensing circuit of a refrigerant fluid is also obtained, the dispensing circuit being suitable for directing the refrigerant fluid towards the point of contact between the tools 14 and the surface of the tube 2.

In one embodiment, the tool-holder unit 1 is also equipped with detecting means of the current that is absorbed by the motor apparatus 20, actuation means of the radial movement means, and control means suitable for controlling the actuation means on the basis of the current absorbed by the motor apparatus.

For example, the actuation means comprise servovalves suitable for adjusting the pressure of the actuation fluid of the radial movement means 11, 22.

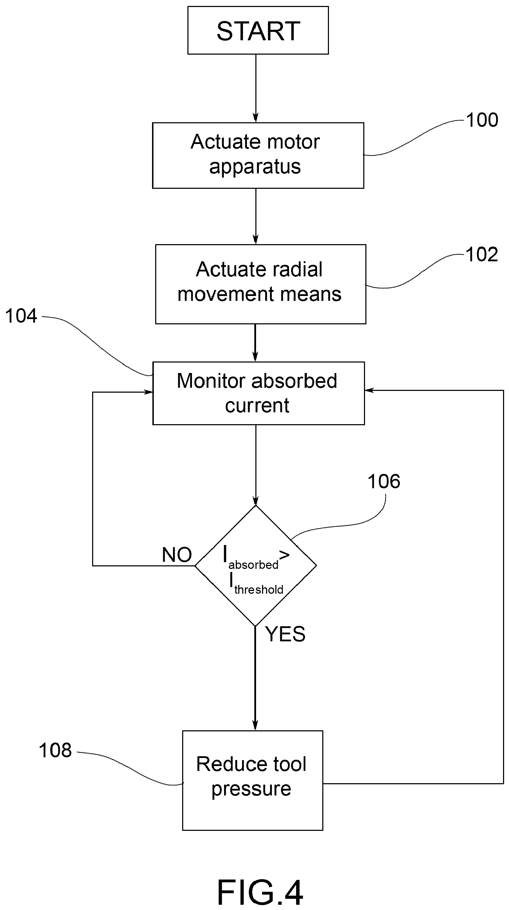

The subject matter of the present invention also encompasses a method for controlling the tool-holder unit 1 as described above. Referring to the flowchart in Fig. 4, once the tube 2 is inserted into the axial cavity 18 in such a way that the surface to be processed is axially aligned with the tools 14, the control method provides for actuating the motor apparatus 20 so as to cause the rotation of the tool shafts 12 and thus the tools 14 mounted on said tool shafts 12 (step 100).

The method therefore involves actuating the radial movement means 11, 22, for example by supplying pressurized fluid to the rack-cylinders 11, in order to bring the tools 14 into contact with the side surface of the tube 2, exerting a desired pressure thereon (step 102) .

The current absorbed by the motor apparatus 20 is thus monitored (step 104).

The radial movement means may thus be controlled so as to vary the pressure exerted by one or more tools on the side surface of the tube as a function of the current absorbed by the motor apparatus (20).

In one embodiment, the absorbed current (I_{absorbed}) by the motor apparatus 20 is compared with a predetermined threshold value (I_{threshold}) (step 106) .

In the event that the predetermined absorbed current threshold is exceeded, the control means instruct the radial actuation means to reduce the pressure exerted by the tools 14 on the side surface of the tube (step 108).

In one embodiment, if the absorbed current is much lower than the predetermined threshold value, the pressure of the tools on the surface of the tube may be increased in order to work with a current close to the threshold value, reducing the processing time as much as possible.

It should be noted that the radial actuation means may be controlled simultaneously or, in a variant embodiment, individually.

Due to the motorized rotation of the tool shafts 12, and with a proper selection of its number of rotations, and thus the peripheral velocity of the tools 14, it is possible to cut tubes with much greater thickness with respect to a group with non-motorized tools.

As described above, the radial movement of the tools 14 has as its resistance torque the working torque of the tool 14.

By varying the pressure on the rack-cylinder 11, it is possible to obtain a variable torque on the basis of the current absorbed by the motor apparatus 20.

Through this control, it is therefore possible to prevent the motor apparatus 20 from stalling.

As a matter of fact:
- if the current absorbed by the motor apparatus 20 is low, that is, significantly lower than a predetermined threshold value, the pressure on the radial movement means may be increased, for example by increasing the pressure on the rack-cylinders 11, possibly through the use of servovalves;
- if the current absorbed by the motor apparatus exceeds the pre-established threshold value, the feeding fluid pressure of the radial movement means may be reduced, consequently reducing the pressure of the tools on the surface of the tube.

In the case of tools in the shape of cutting blades, since part of the driving torque of the tools is absorbed by the buckling of the blades due to thermal expansion, due to the aforementioned refrigeration circuit provided in the fluid distributor 24, it is possible to reduce the thermal expansion and thus the resistance torque.

It is worth noting that the proposed tool-holder unit allows for cutting thick tubes because the tools only cut through the thickness and do not work to section the diameter of the tube. In this way, among other things, the cutting cycle time is significantly reduced, and the cutting chips mostly remain outside the tube, leaving it clean.

In order to meet contingent needs, a person skilled in the art may make a number of changes, adaptations, and substitutions of elements with other functionally equivalent ones to the embodiments of the tool-holder unit according to the invention, without departing from the scope of the following claims. Each of the features described as belonging to a possible embodiment may be obtained independently of the other described embodiments.

## Claims

1. A tool-holder unit for processing a tube, comprising:
- at least two tool supports (10), each of which rotatably supports a tool shaft (12) on which a tool (14) for processing the tube is adapted to be mounted so that the tool (14) processes the side surface of the tube;
- a support-holder body (16) having a toroidal shape extending about a body axis (X) and defining an axial cavity (18) suitable for being crossed by the tube to be processed, the tool supports (10) being mounted on a front side (16a) of said support-holder body (16), substantially perpendicular to the body axis (X), at least one of the tool supports (10) being supported by the support-holder body (16) by means of radial movement means, which are operable for moving the tool support so that the respective tool (14) translates radially with respect to the tube to be processed;
- a motor apparatus (20) suitable for rotating the support-holder body (16); and
- a transmission system suitable for transfering the rotation of the support-holder body (16) to the tool shafts (12) so as to obtain a motorized rotation of the tools during the processing.

2. Unit according to claim 1, comprising a hollow rotation shaft (32) rotatably supported in a unit body (40) housing the motor apparatus (20), the hollow rotation shaft (32) being operable on rotation by the motor apparatus (20), the support-holder body (16) being angularly fixed to one end of said hollow rotation shaft (32) .

3. Unit according to claim 1 or 2, wherein the transmission system comprises:
- for each tool support (10), a transmission shaft (8) rotatably supported by the support-holder body (16) parallel to the body axis (X);
- a fixed toothed crown (36), each transmission shaft (8) being provided with a gear (9), which engages the fixed toothed crown (36) so that, following the rotation of the support-holder body (16), the gear (9) rotates on the fixed toothed crown (36) causing the rotation of the respective transmission shaft (8);
- angular coupling means between the transmission shaft (8) and the tool shaft (12).

4. Unit according to any one of the preceding claims, wherein said radial movement means are operable by a pressurized actuation fluid, and wherein the unit comprises fluid feeding means comprising at least one pressurized fluid inlet port, a feeding circuit of the radial movement means, and at least one pressurized fluid discharge port.

5. Unit according to any one of the preceding claims, wherein said radial movement means comprise a rack-cylinder (11) operable by means of a pressurized fluid and a toothed bush (22) rotatably supported in the support-holder body (16), the toothed bush (22) being angularly engaged with the rack-cylinder (11), the at least one tool support (10) being in the shape of an oscillating arm having a proximal end portion fixed to the toothed bush (22) and a distal end portion housing the tool shaft (12).

6. Unit according to claims 3 and 6, wherein the transmission shaft (8) passes coaxially through the toothed bush (22).

7. Unit according to any one of the preceding claims when dependent on 2 and 4, wherein the fluid feeding means comprise a fluid distributor (24) arranged about the hollow rotation shaft (32), in the fluid distributor inlet and outlet passages of the pressurized fluid are obtained, the fluid feeding circuit comprising feeding and discharge ducts obtained in the hollow rotation shaft and in the support-holder body (16) and in fluidic communication with said inlet and outlet passages.

8. Unit according to the preceding claim, wherein the fluid distributor is provided with an inlet passage of a refrigerant, and wherein, in the hollow rotation shaft and in the support-holder body there is further obtained a dispensing circuit for dispensing a refrigerant, said dispensing circuit being adapted to direct the refrigerant towards the point of contact between the tools and the surface of the tube.

9. Unit according to any one of the preceding claims, further comprising:
- detecting means for detecting the current absorbed by the motor apparatus;
- actuating means for actuating the radial movement means;
- control means suitable for controlling the actuation means as a function of the current absorbed by the motor apparatus.

10. Unit according to the preceding claim, when dependent on claim 4, wherein the actuation means comprise servovalves suitable for adjusting the pressure of the actuation fluid of the radial movement means.

11. A control method for controlling a tool-holder unit (1) according to claim 9 or 10, where a respective tool (14) is mounted on each tool shaft (12), the method comprising the steps of:
- actuating the motor apparatus (20) so as to cause the rotation of the tool shafts (12), and therefore the tools (14) ;
- actuating the radial movement means so as to bring the tools (14) into contact with the side surface of the tube (2) ;
- monitoring the current absorbed by the motor apparatus (20) ;
- controlling the radial movement means so as to vary the pressure exerted by one or more tools on the side surface of the tube as a function of the current absorbed by the motor apparatus (20).

12. Method according to claim 11, wherein the radial movement means comprise at least one rack-cylinder (11) and wherein the step of controlling the radial movement means comprises a step of controlling the feeding pressure of the control fluid of the at least one rack-cylinder (11).
